# EUROPÄISCHE PATENTSCHRIFT

(11) **EP 0 635 707 B1**
(45) Veröffentlichungstag und Bekanntmachung des Hinweises auf die Patenterteilung: **09.12.1998**
(21) Anmeldenummer: 94111477.9
(22) Anmeldetag: 22.07.1994
(51) Int. Cl.: G01L 1/18, G01L 1/20, G01L 1/22

(54) **Einrichtung zum Messen einer Kraft mittels Dickschichtwiderstand**
Force measuring device using a thick-film resistor
Dispositif de mesure de force utilisant une résistance à couche épaisse

(30) Priorität: 22.07.1993 DE 9310968 U
(43) Veröffentlichungstag der Anmeldung: 25.01.1995
(73) Patentinhaber: ROBERT BOSCH GMBH, 70442 Stuttgart (DE)
(72) Erfinder: Heinz, Rudolf, Dipl.-Ing., D-71272 Renningen (DE); Schoor, Ulrich, Ing., D-70439 Stuttgart (DE); Moser, Manfred, Dipl.-Ing., D-72770 Reutlingen (DE)

(56) Entgegenhaltungen:
- EP-A- 0 344 439
- DE-A- 3 726 146
- DE-A- 3 912 280
- DE-A- 4 142 141

## Beschreibung

### Stand der Technik

Die Erfindung geht aus von einer Kraftmeßeinrichtung nach der Gattung des Hauptanspruchs. Eine Einrichtung dieser Art ist aus EP-A-344 439 bekannt, bei der der Unterring aus einem elektrisch leitenden Material besteht. Die Verwendung eines metallischen Unterrings ermöglicht einerseits wegen der nicht spröden Eigenschaft des Metalls eine massive Ausbildung desselben, erfordert aber andererseits zur elektrischen Isolierung des angrenzenden Dickschichtwiderstandselements eine entsprechende Isolierschicht auf der Oberfläche des Unterrings.

Aus der DE-A-37 26 146 ist ebenfalls eine auf der Verwendung von aus Metall gefertigten Elementen beruhende Kraftmeßeinrichtung bekannt. Zur Übertragung der zu messenden Kraft auf den in Form einer Dick- oder Dünnschichtwiderstandsanordnung ausgeführten Meßwertgeber dient ein aus Stahl ausgeführtes Krafteinleitungselement, welches so geformt ist, daß nur ein Teil der zu messenden Kraft auf den Meßwertgeber geführt wird. Das Krafteinleitungselement ist beispielsweise als Teil eines die Hauptkraft aufnehmenden Grundkörpers ausgeführt, wobei zur Entkopplung der zu messenden Kraft von der über den Grundkörper abgeleiteten Hauptkraft eine Nut vorgesehen ist. Zur Erzielung einer besseren Flächenkraftverteilung kann desweiteren in einer Trägerplatte eine weitere Nut vorgesehen sein. Beide Nuten haben zum Ziel, die zu messende Kraft von nicht zu messenden Kräften zu trennen. Es handelt sich bei diesen Nuten somit nicht um Entlastungsnuten zur Ausschaltung einer systematischen Störung.

Eine mehrteilige, ringförmige Kraftmeßeinrichtung wird in der DE-A-41 42 141 beschrieben, die eine Trägerplatte mit einer darauf angebrachten Dickschichtmeßanordnuung sowie einen Oberring in Form eines Krafteinleitungselementes aufweist.

Aus der DE-A-39 12 280 ist ferner eine als Dickschichtscheibe ausgeführte Kraftmeßeinrichtung bekannt, welche zur Anwendung zwischen ein Druckelement und ein Gegenelemente eingespannt wird. Derselben Schrift ist weiterhin ein Verfahren zur Herstellung von Dickschichtkraftmeßanordnungen entnehmbar.

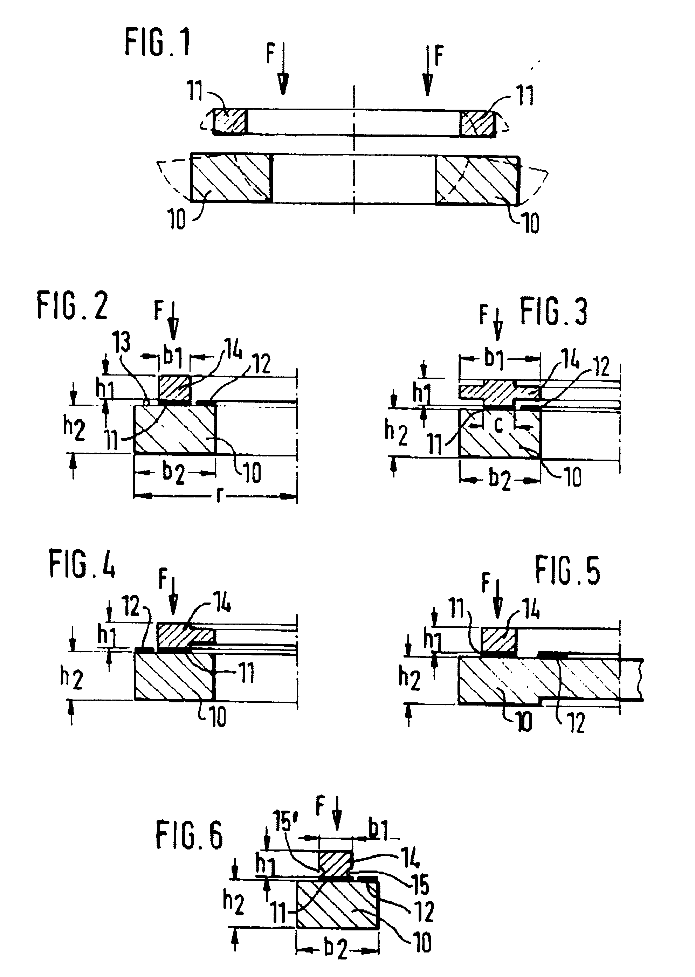

Wird eine aus Ober- und Unterring mit darauf angebrachter Dickschichtanordnung bestehende Kraftmeßeinrichtung axial über den Oberring belastet, so ergibt sich bei genauer Analyse die in Figur 1 dargestellte Situation. Infolge der Krafteinwirkung werden die beiden Bestandteile der Kraftmeßeinrichtung, Ober-bzw. Unterring, elastisch zusammengepreßt und gleichzeitig radial auseinandergedrückt. Da die an der Oberseite des Oberringes bzw. Unterseite des Unterringes aufliegenden Kraftzuführungselemente häufig eine andere radiale Steifigkeit als die Kraftmeßeinrichtung selbst aufweisen, erfolgt die Radialverformung von Ober- bzw. Unterring nicht gleichmäßig, sondern, weil zugleich Reibungskräfte der Radialdeformation entgegenwirken, als tonnenförmige Deformation. Folge ist, wie in Figur 1 gezeigt, eine Schiefstellung der Kontaktflächen von Ober- und Unterring. Dies wiederum kann in Form insbesondere von Nichtlinearität oder Hysterese das Meßsignal verfälschen.

Aufgabe der vorliegenden Erfindung ist es, eine Ober- und Unterring aufweisende Kraftmeßeinrichtung so zu gestalten, daß zu Meßfehlern führende Deformationen vermieden werden.

Diese Aufgabe wird durch Gestaltung der Meßeinrichtung entsprechend den kennzeichnenden Merkmalen des Anspruchs 1 gelöst. Durch einen im Vergleich zum Unterring flachen Oberring mit einer Geometrie gemäß Hauptanspruch, der mittig auf dem Unterring angeordnet ist, wird eine deutlich kleinere Radialdeformation erreicht. Vorteil des keramischen Unterrings ist ferner, daß die elektrische Ausrüstung der Sensoreinrichtung aufgrund der isolierenden Eigenschaft des Keramikmaterials vereinfacht wird, indem keine zusätzlichen Isolationsschichten erforderlich sind. Durch die seitlichen Entlastungsnuten am Oberring werden Lastüberhöhungen an den Rändern des spröden keramischen Unterrings vermieden.

Gemäß einer alternativen Ausführungsform ist der Oberring so gestaltet, daß seine Eckmaße im wesentlichen denen des Unterrings entsprechen. In einigen Anwendungsfällen, zum Beispiel wenn im Ringquerschnitt noch elektronische Bauelemente untergebracht werden sollen, kann es zweckmäßig sein, den Oberring mit bezüglich der Längsachse asymmetrischen, hammerartigem Profil auszuführen. Höhe und asymmetrische Verbreiterung des Oberringes entsprechen dabei zweckmäßig wiederum im wesentlichen den durch den Unterring vorgegebenen Eckmaßen.

In einer vorteilhaften Ausgestaltung ist der Unterring als Scheibe ausgeführt. Eine weitere vorteilhafte Maßnahme zur Deformationsunterdrückung besteht darin, den Unterring aus Aluminiumoxid (Al₂O₃)-Keramik auszuführen.

Nachfolgend wird die Erfindung anhand von Ausführungsbeispielen und der Zeichnung näher erläutert.

Es zeigen Figur 1 das prinzipielle Verhalten einer aus Ober- und Unterring aufgebauten Kraftmeßeinrichtung unter Einwirkung einer Kraft, Figuren 2 bis 6 Ausführungsbeispiele einer Kraftmeßeinrichtung mit verschiedenen Geometrien.

### Beschreibung der Ausführungsbeispiele

Hauptbestandteile einer erfindungsgemäßen Kraftmeßeinrichtung, wie sie in Figur 2 dargestellt ist, sind ein Unterring 10 und ein Oberring 14. Auf den Unterring 10 ist in bekannter Weise eine Dickschichtanordnung aufgebracht. Deren Hauptbestandteil ist eine Widerstandsschicht 11, unter der in der Regel Leiterbahnen angeordnet sind. Auf der Widerstandsschicht 11 kann ferner noch eine Glättungs- oder Isolationsschicht vorgesehen sein, welche zweckmäßig auf Glasbasis aufgebaut sind. Besteht der Oberring 14 aus Stahl, ist die Isolationsschicht zweckmäßig an diesem angeordnet, sie ist dann in der Regel ein spezielles, für Stahl geeignetes Haftglas. Die zuletzt genannten Schichten sind in der Zeichnung nicht dargestellt. Neben der das Meßsignal liefernden aktiven Widerstandsschicht 11 ist häufig noch eine weitere passive Widerstandsschicht 12 angeordnet. Deren Widerstandsteile werden mit den Widerstandsteilen der aktiven Widerstandsschicht 11 zu Meßbrücken zusammengeschaltet, um die Auswertung des Meßsignales zu verbessern. Weiterhin sind auf dem Unterring 10 noch Anschlüsse 13 zum Anschluß elektrischer Verbindungen angeordnet. Sie werden in den weiteren Figuren aus Gründen der Übersichtlichkeit nicht mehr gezeigt. Die aktive Widerstandsschicht 11 ist in Bezug auf den Unterring mittig angeordnet. Sie ist mindestens so breit, daß sie die Kontaktfläche des Oberringes 14 vollständig bedeckt. Ober- und Unterring 14 bzw. 10 sind durch Verkleben oder Verglasen miteinander verbunden. Das Herstellen der Verbindung erfolgt in einfacher Weise, indem auf den Unterring 10 eine Klebstoffschicht oder eine Schicht aus fließfähigem Glas aufgebracht, anschließend der Oberring 14 in die vorbereitete Verbindungsschicht gepreßt und im Ofen ausgehärtet wird.

Erfindungsgemäß wird eine starke Unterdrückung von radialen Deformationen durch eine geeignete geometrische Dimensionierung von Oberring 14 und Unterring 10 erzielt. Die in Figur 2 dargestellte erste Ausführungsform weist einen relativ flachen und breiten Oberring 14 auf. Seine radiale Breite b1 wird in Abstimmung auf die Breite b2 des Unterringes 10 derart gewählt, daß sie eine Beziehung:
b₂=2...4 b₁ erfüllt.

Die Breite b2 des Unterringes 10 wird dabei so dimensioniert, daß sie einer Beziehung:
r=1...4 b₂ genügt, wobei r der Außenradius des Unterringes ist.

Gleichzeitig wird die Höhe h1 des Oberringes im Verhältnis zur Höhe h2 des Unterringes 10 derart gewählt, daß sie einer Beziehnung:
h₂=2...4 h₁. genügt.

In der Ausführungsform gemäß Figur 3 wird der Oberring 14 durch eine teilweise radiale Verbreiterung versteift. Oberring 14 und Unterring 10 stimmen in diesem Fall bezüglich ihrer radialen Breite b₁ bzw. b₂ überein, es gilt die Dimensionierung:
b₁=b₂.

Ebenso wird die Höhe h₁ des Oberringes zweckmäßig entsprechend der Höhe h₂ des Unterringes 10 gewählt, nicht aber kleiner als die halbe Höhe h₂ des Unterringes 10, es gilt die Dimensionierung:
h₂=1...2 h₁.

Der Oberring 14 entspricht somit in seinen Eckmaßen im wesentlichen den Eckmaßen des Unterringes 10. Die radiale Verbreiterung des Oberringes 14 muß nicht über seine gesamte axiale Länge h₁ erfolgen, sollte aber wenigstens 2/3 davon betragen. An der Kontaktseite zum Unterring 10 hin erfolgt eine Verjüngung des Querschnitts des Oberringes auf eine Breite c, welche vorzugsweise 1/3 der Breite b₂ des Unterringes 10 beträgt, zumindest aber in einem Intervall gemäß der Dimensionierung:
b₂=2...4 c liegt. Der Übergang vom breiten Querschnitt auf den schmalen Querschnitt mit der Breite c kann, wie in Figur 3 dargestellt, stufenartig erfolgen, ebenso aber als abgerundeter oder schräger Übergang ausgebildet sein. Bei der Ausführungsform gemäß Figur 3 erfolgt der Abgleich der passiven Widerstände 12 zweckmäßig vor dem Verbinden des Unterringes 10 mit dem Oberring 14, zum Beispiel durch Verkleben.

Figur 4 zeigt eine leicht abgewandelte Form des Auführungsbeispieles der Figur 3. Die radiale Verbreiterung des Oberringes 14 wurde hier bei ansonsten gleicher Dimonsionierung begzüglich der Längsachse asymmetrisch nur zu einer Seite hin erstreckt. Zwar zieht dies gegenüber der Form der Figur 3 wieder eine leichte Zunahme der Radialdeformationen nach sich. Dennoch kann eine solche Lösung zweckmäßig sein, wenn zum Beispiel in dem über der Widerstandsschicht 12 verbleibenden Freiraum elektronische Bauelemente untergebracht werden sollen.

Eine gute Unterdrückung von Radialdeformationen wird weiterhin erzielt, wenn der Unterring 10 scheibenförmig ausgeführt wird, wie in Figur 5 dargestellt. Dabei muß die axiale Dicke d der scheibenförmigen Erweiterung des Unterringes 10 nicht unbedingt dessen Höhe h₂ entsprechen, sie kann auch, wie in Figur 5 gezeigt, insbesondere kleiner als h₂ sein. Voraussetzung für eine scheibenförmige Ausbildung des Unterrings 10 ist allerdings, daß die geometrische Situation der vorgesehenen Anwendung dies zuläßt.

In einer weiteren, in Figur 6 dargestellten Ausführung besteht der Unterring 10 der vorgeschlagenen Kraftmeßeinrichtung aus einer Aluminiumoxid (Al₂O₃)-Keramik. Um Zugspannungen möglichst klein zu halten, entspricht die Höhe h₂ eines solchen aus Aluminiumoxid (Al₂O₃) gefertigten Unterringes 10 wenigstens seiner Breite b₂. Das Metall des Oberringes 14 ist bei Verwendung eines keramischen Unterringes 10 so zu wählen, daß sein thermischer Ausdehnungskoeffizient mit dem des Unterringes 10 möglichst übereinstimmt. Anderenfalls besteht die Gefahr, daß die Widerstandsschicht 12 auf dem Unterring 10 während des Abkühlens der Verklebung oder der Verglasung abgerissen wird. Hierfür geeignete Metalle sind zum Beispiel die Metallsorten "Vakon 10" bzw. "Vakon 11" der Firma "VAKUUMSCHMELZE". Dimensioniert wird der Oberring 14 so, daß seine Breite b₁ der Beziehung:
b₂=3...4 b₁ genügt. Seine axiale Höhe h₁ sollte die Beziehung
h₂→2...4 h₁ erfüllen. Zur Vermeidung von Lastüberhöhungen an den Rändern, welche zur Beschädigung des Keramikmaterials des Unterrings 10 führen können, weist der Oberring in seinem unteren, nahe der Kontaktfläche zum Unterring liegenden Bereich, Entlastungsnuten 15, 15' auf.

Möglich ist es weiterhin, den Oberring 14 ebenfalls aus Aluminiumoxid (Al₂O₃)-Keramik zu fertigen. Dies bietet bei der Herstellung der Kraftmeßeinrichtung den Vorteil, daß Oberring 14 und Unterring 10 durch einfache Verglasung, ohne vorheriges Aufbringen einer Isolationsschicht, meist in Form eines speziellen Haftglases am Oberring 14 miteinander verbunden werden können. Ebenso wie ein keramischer Unterring 10 sollte der Oberring 14 so dimensioniert sein, daß seine axiale Länge h₁ zumindest seiner radialen Breite b₁ entspricht.

Die in der Beschreibung vorgenommene Einteilung der vorgeschlagenen Kraftmeßeinrichtung in die Teile Ober- bzw. Unterring dient nur zur begrifflichen Unterscheidung, sie ist für die Praxis ohne Bedeutung. Insbesondere kann die Krafteinwirkung auch über den Unterring 10 erfolgen. Desgleichen ist die in den Figuren 2 bis 6 vorgeschlagene Anordnung der passiven Widerstandsschicht 12 bzw. in Figur 2 der Anschlusse 13 willkürlich und für den Gegenstand dieser Erfindung ohne Bedeutung.

## Patentansprüche

1. Einrichtung zum Messen einer Kraft, mit einem Unterring, auf dem wenigstens ein Dickschichtwiderstandselement angeordnet ist, dessen elektrischer Widerstand druckabhängig ist sowie mit einem Oberring, der die zu messende Kraft auf das Dickschichtwiderstandselement überträgt, wobei
- die axiale Höhe (h₂) des Unterringes dem 2- bis 4-fachen der axialen Höhe (h₁) des Oberringes (14) entspricht
- die radiale Breite des Dickschichtwiderstandes (11) zumindest der radialen Breite (b₁) des Oberringes (14) an der Kontaktfläche entspricht und
- das Dickschichtwiderstandselement (11) in radialer Richtung mittig auf dem Unterring (10) angeordnet ist,
dadurch gekennzeichnet, daß
- der Unterring (10) aus Aluminiumoxid (Al₂O₃)-Keramik gefertigt ist,
- die radiale Breite (b₂) des Unterrings (10) dem 2- bis 4-fachen der radialen Breite (b₁) des Oberrings (14) entspricht,
- der Oberring (14) nahe der Kontaktfläche zum Unterring (10) seitliche Entlastungsnuten (15, 15') aufweist zur Vermeidung von Lastüberhöhungen an den Rändern der Kontaktfläche.

2. Einrichtung nach Anspruch 1, dadurch gekennzeichnet, daß
- der Oberring (14) über einen Teil seiner axialen Höhe gegenüber der Kontaktfläche verbreitert ist,
- die radiale Breite (b₁) des Oberringes (14) auf mindestens 2/3 seiner axialen Höhe (h₁) mindestens 2/3 der radialen Breite (b₂) des Unterringes (10) entspricht, und
- die axiale Höhe (h₁) des Unterringes (10) der 1- bis 2-fachen axialen Höhe (h₂) des Oberringes (14) entspricht, und
- die radiale Breite des Dickschichtwiderstandes zumindest der radialen Breite (c) des Oberringes (14) an der Kontaktfläche zum Unterring (10) entspricht.

3. Einrichtung nach Anspruch 2, dadurch gekennzeichnet, daß der Oberring (14) symmetrisch zu seiner axialen Mittellinie radial verbreitert ist, so daß seine radiale Breite im wesentlichen der des Unterringes (10) entspricht.

4. Einrichtung nach Anspruch 2, dadurch gekennzeichnet, daß der Oberring (10) asymmetrisch zu seiner axialen Mittellinie verbreitert ist, wobei die Verbreiterung zur Ringmitte hin ausgeführt ist.

5. Einrichtung nach Anspruch 1 oder 2, dadurch gekennzeichnet, daß der Unterring als Scheibe ausgeführt ist.

6. Einrichtung nach Anspruch 1, dadurch gekennzeichnet, daß der Oberring (14) aus einem Metall besteht, dessen temperaturabhängiger Ausdehnungskoeffizient mit dem von Aluminiumoxid (Al₂O₃) im wesentlichen übereinstimmt.

7. Einrichtung nach Anspruch 1, dadurch gekennzeichnet, daß der Oberring aus Aluminiumoxid (Al₂O₃) gefertigt ist.

## Claims

1. Device for measuring a force, having a lower ring, on which is arranged at least one thick-film resistance element, the electrical resistance of which is pressure-dependent, and having an upper ring, which transmits the force to be measured to the thick-film resistance element,
- the axial height (h₂) of the lower ring corresponding to 2 to 4 times the axial height (h₁) of the upper ring (14),
- the radial width of the thick-film resistor (11) corresponding at least to the radial width (b₁) of the upper ring (14) at the contact face, and
- the thick-film resistance element (11) being arranged centrally on the lower ring (10) in the radial direction,
characterized in that
- the lower ring (10) is manufactured from aluminium oxide (Al₂O₃) ceramic,
- the radial width (b₂) of the lower ring (10) corresponds to 2 to 4 times the radial width (b₁) of the upper ring (14),
- the upper ring (14) has lateral relieving grooves (15, 15') near the contact face with the lower ring (10), in order to avoid excessive loads at the edges of the contact face.

2. Device according to Claim 1, characterized in that
- the upper ring (14), over part of its axial height, is wider than the contact face,
- the radial width (b₁) of the upper ring (14) corresponds, over at least 2/3 of its axial height (h₁), to at least 2/3 of the radial width (b₂) of the lower ring (10),
- the axial height (h₁) of the lower ring (10) corresponds to 1 to 2 times the axial height (h₂) of the upper ring (14), and
- the radial width of the thick-film resistor corresponds at least to the radial width (c) of the upper ring (14) at the contact face with the lower ring (10).

3. Device according to Claim 2, characterized in that the upper ring (14) is radially widened symmetrically to its axial centre line, so that its radial width corresponds essentially to that of the lower ring (10).

4. Device according to Claim 2, characterized in that the upper ring (10) is widened asymmetrically to its axial centre line, the widening being executed towards the ring centre.

5. Device according to Claim 1 or 2, characterized in that the lower ring is designed as a disc.

6. Device according to Claim 1, characterized in that the upper ring (14) consists of a metal, the temperature-dependent coefficient of expansion of which is essentially identical to that of aluminium oxide (Al₂O₃).

7. Device according to Claim 1, characterized in that the upper ring is manufactured from aluminium oxide (Al₂O₃).

## Revendications

1. Installation pour mesurer une force comprenant une bague inférieure munie d'au moins un élément en couche épaisse et dont la résistance électrique dépend de la pression ainsi que d'une bague supérieure transmettant la force à mesurer à l'élément résistant à couche épaisse, et,
- la hauteur axiale (h₂) de la bague inférieure correspond à 2-4 fois la hauteur axiale (h₁) de la bague supérieure (14),
- la largeur radiale de la résistance en couche épaisse (11) correspond au moins à la largeur radiale (b₁) de la bague supérieure (14) au niveau des surfaces de contact et,
- l'élément rigide existant en couche épaisse (11) est prévu dans la direction radiale, de manière centrée par rapport à la bague inférieure (10),
caractérisée en ce que
- la bague inférieure (10) est fabriquée en céramique d'alumine (Al₂O₃),
- la largeur radiale (b₂) de la bague inférieure (10) correspond à 2-4 fois la largeur radiale (b₁) de la bague supérieure (14),
- la bague supérieure (14) comporte a proximité des surfaces de contact avec la bague inférieure (10), des rainures de décharge latérales (15, 15') pour éviter des augmentations de charge au niveau des bords des surfaces de contact.

2. Installation selon la revendication 1,
caractérisée en ce que
- la bague supérieure (14) est étendue sur une partie de sa hauteur axiale par rapport à la surface de contact,
- la largeur radiale (b₁) de la bague supérieure (14) correspond sur au moins 2/3 de sa hauteur axiale (h₁) à au moins 2/3 de la largeur radiale (b₂) de la bague inférieure (10),
- la hauteur axiale (h₁) de la bague inférieure (10) représente entre 1 et 2 fois la hauteur axiale (h₂) de la bague supérieure (14) et,
- la largeur radiale de la résistance en couche épaisse correspond au moins à la largeur radiale (c) de la bague supérieure (14) au niveau de la surface de contact avec la bague inférieure (10).

3. Installation selon la revendication 2,
caractérisée en ce que
la bague supérieure (14) s'étende suivant une symétrie radiale par rapport à sa ligne axiale pour que sa largeur radiale corresponde essentiellement à celle de la bague inférieure (10).

4. Installation selon la revendication 2,
caractérisée en ce que
la bague supérieure (10) est étendue de manière asymétrique par rapport à sa ligne médiane axiale et l'extension est réalisée vers le milieu de l'anneau.

5. Installation selon les revendications 1 ou 2,
caractérisée en ce que
la bague inférieure est en forme de disque.

6. Installation selon la revendication 1,
caractérisée en ce que
la bague supérieure (14) est en métal et son coefficient de dilatation thermique correspond pour l'essentiel à celui de l'alumine (Al₂O₃).

7. Installation selon la revendication 1,
caractérisée en ce que
la bague supérieure est fabriquée en alumine (Al₂O₃).
